# EUROPÄISCHE PATENTANMELDUNG

(11) **EP 0 933 588 A2**
(43) Veröffentlichungstag der Anmeldung: **04.08.1999**
(21) Anmeldenummer: 99101362.4
(22) Anmeldetag: 26.01.1999
(51) Int. Cl.: F21Q 1/00, B60Q 1/00, B60Q 1/26

(54) **Leuchte für Fahrzeuge**

(30) Priorität: 30.01.1998 DE 19803537
(71) Anmelder: Hella KG Hueck & Co., 59552 Lippstadt (DE)
(72) Erfinder: Decker, Detlef, 59558 Lippstadt (DE)

(57) **Zusammenfassung**

Die Erfindung bezieht sich auf eine Leuchte für Fahrzeuge, insbesondere für Kraftfahrzeuge mit einem Lichtleitelement (6)
- mit einer auf der Vorderseite angeordneten Lichtaustrittsfläche (11),
- mit einer auf einer gegenüberliegenden Rückseite (5) angeordneten Reflexionsfläche (8) und
- mit einer sich in einem spitzen Winkel zu einer optischen Achse (14) der auf der Rückseite (5) des Lichtleitelements (6) angeordneten Lichtquelle (4) erstreckenden Umlenkfläche (13), wobei die Umlenkfläche (13) an einem Ende (7) des Lichtleitelements (6) angeordnet ist und das Lichtleitelement (6) eine Lichteinkoppelfläche (15) aufweist, die sich im wesentlichen in einer gemeinsamen Ebene mit der Rückseite (5) des Lichtleitelements (6) erstreckt.

## Beschreibung

Die Erfindung betrifft eine Leuchte für Fahrzeuge, insbesondere für Kraftfahrzeuge, mit einem Lichtleitelement mit einer auf der Vorderseite angeordneten Lichtaustrittsfläche, mit einer auf einer gegenüberliegenden Rückseite angeordneten Reflexionsfläche und mit einer sich in einem spitzen Winkel zu einer optischen Achse der auf der Rückseite des Lichtleiterelements angeordneten Lichtquelle erstreckenden Umlenkfläche.

Aus der EP 0 780 265 A2 ist eine Leuchte für Fahrzeuge mit einem Lichtleitelement bekannt, das von an einer Rückseite des Lichtleiterelements angeordneten Lichtquelle ausgesandte Lichtstrahlen an einer Umlenkfläche in Richtung der Rückseite des Lichtleiterelements umlenkt, so daß nach weiterer Totalreflexion an der Rückseite des Lichtleiterelements die Lichtstrahlen an der gegenüberliegend der Rückseite angeordneten Lichtaustrittsfläche abgestrahlt werden. Zur Einleitung der Lichtstrahlen weist das Lichtleitelement einen von der Rückseite abragenden Ansatz auf, der sich in einem mittleren Bereich nach hinten erstreckt. Auf der dem Ansatz gegenüberliegenden Vorderseite ist eine Vertiefung ausgebildet unter Bildung von aufeinander zulaufenden schrägen Umlenkflächen. Nachteilig an der bekannten Leuchte ist, daß infolge der Umlenkflächen in einem zentralen bzw. mittleren Bereich ein korrespondierender mittlerer Bereich einer nachgeordneten Lichtscheibe von der Beleuchtung ausgeschlossen ist. Weiterhin wirkt sich der Ansatz des Lichtleiters ungünstig auf die Bautiefe der Leuchte aus.

Aufgabe der Erfindung ist es daher, eine Leuchte für Fahrzeuge derart auszubilden, daß über die gesamte Länge der Leuchte eine homogene Beleuchtung erzielt wird und daß die Bautiefe der Leuchte möglichst gering gehalten wird.

Die Aufgabe wird erfindungsgemäß dadurch gelöst, daß die Umlenkfläche an einem Ende des Lichtleiterelements angeordnet ist und daß das Lichtleitelement eine Lichteinkoppelfläche aufweist, die sich im wesentlichen in einer gemeinsamen Ebene mit der Rückseite des Lichtleiterelements erstreckt.

Der besondere Vorteil der Erfindung besteht darin, daß platzsparend ein Lichtleitelement mit einer durchgehenden Lichtaustrittsfläche geschaffen wird. Somit wird eine homogene Beleuchtung ohne sichtbare Unterbrechung der Lichtaustrittsfläche erzielt. Grundgedanke der Erfindung ist es, die Lichteinkopplung und die Umlenkung des Lichtes im Lichtleitelement an einem Ende des Lichtleiterelements anzuordnen.

Nach einer Weiterbildung der Erfindung weist eine Leuchte mehrere benachbarte Lichtleitelemente auf, wobei einer Lichtquelle jeweils zwei Enden benachbarter Lichtleitelemente zugeordnet sind. Dabei sind die Enden jeweils als Umlenkflächen ausgebildet, wobei eine erste Umlenkfläche des ersten Lichtleitelements das von der Lichtquelle ausgesandte Licht in Längsrichtung des Lichtleiters umlenkt und eine zweite Umlenkfläche des benachbarten Lichtleitelements das innerhalb des benachbarten Lichtleitelements reflektierte Licht im wesentlichen koaxial zu der optischen Achse der Lichtquelle in Richtung der Lichtscheibe umlenkt. Hierdurch wird eine besonders platzsparende und kompakte Anordnung der Lichtleitelemente ermöglicht, wobei die zwei Umlenkflächen hintereinander angeordnet sind.

Nach einer Ausgestaltung der Erfindung steigt die Reflexionsfläche des Lichtleitelements in Richtung auf das von der Lichteinkoppelfläche abgewandte Ende desselben kontinuierlich zu der Lichtaustrittsfläche an, so daß eine homogene Abstrahlung über die Länge des Lichtleiters gewährleistet ist.

Weitere Vorteile der Erfindung ergeben sich aus den weiteren Unteransprüchen.

Ausführungsbeispiele der Erfindung werden anhand der Zeichnungen nachfolgend näher erläutert.

Es zeigen:
- Figur 1: eine Leuchte mit mehreren nebeneinander angeordneten Lichtleitelementen im Längsschnitt,
- Figur 2: eine Stirnansicht eines Lichtleitelements gemäß Figur 1,
- Figur 3: einen Längsschnitt eines Lichtleitelements nach einem zweiten Ausführungsbeispiel,
- Figur 4: einen Längsschnitt eines Lichtleitelements nach einem dritten Ausführungsbeispiel und
- Figur 5: einen Längsschnitt eines Lichtleitelements nach einem weiteren Ausführungsbeispiel.

Die im folgenden beschriebene Leuchte kann beispielsweise als Blinkleuchte, Schlußleuchte oder Bremsleuchte für Kraftfahrzeuge eingesetzt werden. Sie kann insbesondere unter Bildung einzelner Lichtleiterelemente als Kleinleuchte, insbesondere zur Seitenmarkierung bzw. als Zusatzblinkleuchte eingesetzt werden.

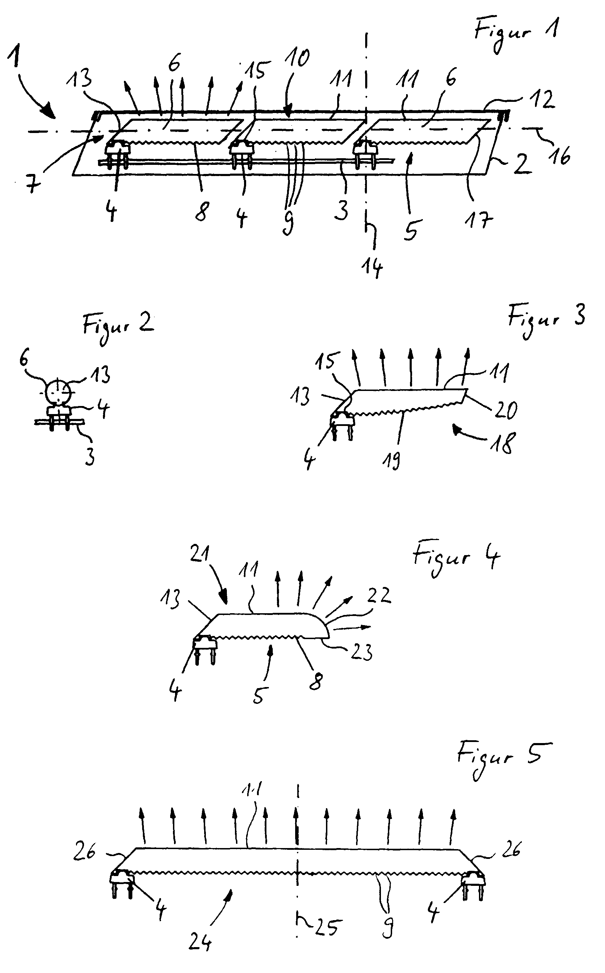

Die in Figur 1 und in Figur 2 dargestellte Leuchte (1) weist ein Gehäuse (2) auf, das in einer Ausnehmung eines Kraftfahrzeuges in bekannter Weise eingesetzt und arretiert ist. In dem Gehäuse (2) ist eine Leiterplatte (3) angeordnet, die unter anderem mit einer Mehrzahl von einander beabstandeten Lichtquellen (4) bestückt ist. Die Lichtquellen (4) sind vorzugsweise als Leuchtdioden (LED) ausgebildet. Die Lichtquellen (4) greifen mit ihrer Lichtaustrittsfläche jeweils in eine Vertiefung an einer Rückseite (5) eines Lichtleitelements (6) ein. Die Vertiefung ist jeweils an einem Ende (7) des Lichtleitelements (6) angeordnet. Die Lichtleitelemente (6) sind jeweils gleichförmig als Zylinderkörper mit schrägen parallelen Stirnflächen ausgebildet, die sich jeweils stirnseitig eines benachbarten Lichtleitelements (6) anschließen. Die Lichtleitelemente weisen auf der dem Gehäuse (2) zugewandten Rückseite (5) eine Reflexionsfläche (8) auf, die jeweils aus einer Vielzahl von lichtablenkenden Prismen (9) besteht. Auf einer gegenüberliegenden Vorderseite (10) erstreckt sich eine Lichtaustrittsfläche (11), aus der das Licht aus dem Lichtleitelement (6) abgestrahlt und in Richtung einer Lichtscheibe (12) geleitet wird, die gegebenenfalls lichtstreuende Mittel aufweist, und randseitig an dem Gehäuse (2) befestigt ist zur vollflächigen Abdeckung der Gehäuseöffnung.

An dem der Lichtquelle (4) zugewandten Ende (7) weist das Lichtleitelement (6) eine schräge Umlenkfläche (13) als Stirnfläche auf, die sich im wesentlichen in einem spitzen Winkel zu einer optischen Achse (14) der Lichtquelle (4) erstreckt, vorzugsweise einen Winkel von 45 Grad mit derselben bildet. Somit werden die von der Lichtquelle (4) ausgesandten Lichtstrahlen nach Eintritt in das Lichtleitelement (6) an einer senkrecht zur optischen Achse (14) sich erstreckenden ebenen Lichteinkoppelfläche (15) an der Umlenkfläche (13) in Richtung einer Längsachse (16) des Lichtleitelements (6) umgelenkt. Durch weitere Totalreflexion an den rückseitig angeordneten Prismen (9), die vorzugsweise verspiegelt ausgeführt sind, tritt das Licht an der Lichtaustrittsfläche (11) aus. Ein Teil des in das Lichtleitelements (6) eingeleiteten Lichtbündels wird erst an einer der Lichteinkoppelfläche (15) abgewandten Stirnseite des Lichtleitelements (6) als zweite Umlenkfläche (17) in Richtung der Lichtscheibe (12) reflektiert. Die zweite Umlenkfläche (17) ist parallel zur ersten Umlenkfläche (13) orientiert. Die zweite Umlenkfläche (17) ist zu der ersten Umlenkfläche (13) des benachbarten Lichtleitelements (16) beabstandet angeordnet und erstreckt sich mit einem vorderen Teil derselben in einen Bereich der optischen Achse der benachbarten Lichtquelle (4). Der Abstand zwischen der zueinander orientierten ersten Umlenkfläche (13) und der zweiten Umlenkfläche (17) kann insbesondere bei verspiegelter Ausbildung der Umlenkflächen (13 und 17) derart gering gewählt werden, daß eine gleichmäßige und ohne sichtbare Unterbrechnung ausgebildete Beleuchtung erzielt werden kann. Die Vorderseiten (10) der Lichtleitelemente (6) sind bündig zueinander angeordnet. Insgesamt ermöglicht diese Anordnung eine gleichmäßige Beleuchtung sowie eine geringe Einbautiefe der Leuchte.

Die Prismen (9) erstrecken sich fortlaufend an der Rückseite (5) über die gesamte Länge des Lichtleitelements (6). Sie bilden eine plane Seite der Reflexionsfläche (8), so daß der das Lichtleitelement (6) als Zylinder mit einem kreisabschnittförmigen Querschnitt ausgebildet ist.

Nach einem zweiten Ausführungsbeispiel gemäß Figur 3 ist ein Lichtleitelement (18) mit einer in Längsrichtung des Lichtleitelements (18) schräg verlaufenden Reflexionsfläche (19) ausgebildet. Die Reflexionsfläche (19) steigt von dem der Lichtquelle (4) zugewandten Ende des Lichtleitelements (18) kontinuierlich in Richtung auf das gegenüberliegende Ende des Lichtleitelements (18) zu der Lichtaustrittsfläche (11) an.

Hierdurch wird eine zweite Umlenkfläche (20) gebildet, die kürzer ausgebildet ist als die gemäß Figur 1 beschriebene zweite Umlenkfläche (17). Darüber hinaus ist das Lichtleitelement (18) in gleicher Weise zu dem Lichtleitelement (6) ausgebildet, so daß für diese die gleichen Bezugsziffern gewählt sind. Durch den von der Lichteinkoppelfläche (15) in Längsrichtung des Lichtleitelements (18) gebildeten querschnittsverringernden Verlauf desselben wird eine homogenere Ausleuchtung erzielt. Der Anstieg der Reflexionsfläche (19) von der ersten Umlenkfläche (13) bis zur zweiten Umlenkfläche (20) weist vorzugsweise eine Höhe auf, die dem halben Durchmesser des Lichtleitelementes (18) entspricht. Eine Aneinanderreihung von Lichtleitelementen (18) ist wie beim ersten Ausführungsbeispiel möglich.

Nach einem weiteren Ausführungsbeispiel gemäß Figur 4 weist ein Lichtleitelement (21) im Unterschied zu dem gemäß Figur 1 beschriebenen Lichtleitelement (6) an dem der ersten Umlenkfläche (13) gegenüberliegenden Ende ein bogenförmiges Lichtaustrittssegment (22) auf. Das Lichtaustrittssegment (22) hat eine konvexe Struktur und erstreckt sich stetig von der langgestreckten Lichtaustrittsfläche (11) bis zu der Rückseite (5) des Lichtleitelements (21). An das Lichtaustrittssegment (22) schließt sich entlang der Rückseite (5) eine plane zweite Umlenkfläche (23) an, die sich bis zu den Prismen (9) der Reflexionsfläche (8) erstreckt. Dieses Lichtleitelement (21) kann vorzugsweise als seitlicher Abschluß einer Blinkleuchte dienen, wobei eine Lichtabstrahlung unter flachem Winkel ermöglicht ist. In Abhängigkeit von dem gewünschten Lichtbild kann das Lichtaustrittssegment (22) auch eine gekrümmte Kontur aufweisen.

Nach einem weiteren Ausführungsbeispiel gemäß Figur 5 kann eine Leuchte auch aus einem einzelnen Lichtleitelement (24) ausgebildet sein. Das Lichtleitelement (24) ist bezüglich einer Quermittelebene (25) symmetrisch ausgebildet und weist an den gegenüberliegenden Enden des langgestreckten Lichtleitelements (24) jeweils eine Lichtquelle (4) auf, der jeweils eine Umlenkfläche (26) zugeordnet ist. Die Umlenkflächen (26) bilden jeweils einen gleichen spitzen Winkel zu der optischen Achse der Lichtquellen (4), so daß das jeweils eingeleitete Lichtbündel in entgegengesetzter Richtung aufeinander zu umgelenkt wird. Hierdurch wird bei gleicher Länge des Lichtleitelements (24) im Vergleich zu dem Lichtleitelement (6) des ersten Ausführungsbeispiel ein doppelt so hoher Lichtstrom in dem Lichtleitelement (24) transportiert und abgestrahlt. Alternativ kann der Querschnitt des Lichtleitelements (24) in Richtung der Mitte desselben entsprechend dem Ausführungsbeispiel gemäß Figur 3 abnehmen, so daß eine besonders homogene Lichtverteilung erzeugt wird. Diese Ausführungsform ist vorzugsweise für Seitenmarkierungsleuchten einsetzbar.

Die Umlenkflächen (13, 17, 20, 23, 26)können mit optischen Mitteln zur besseren Lichtrichtung versehen sein. Die optischen Mittel können dabei als eine Mikrooptik ausgebildet sein oder aus einer lichtrichtenden freien optischen Fläche bestehen.

## Patentansprüche

1. Leuchte für Fahrzeuge, insbesondere für Kraftfahrzeuge mit einem Lichtleitelement
- mit einer auf der Vorderseite angeordneten Lichtaustrittsfläche,
- mit einer auf einer gegenüberliegenden Rückseite angeordneten Reflexionsfläche und
- mit einer sich in einem spitzen Winkel zu einer optischen Achse der auf der Rückseite des Lichtleitelements angeordneten Lichtquelle erstreckenden Umlenkfläche, dadurch gekennzeichnet, daß die Umlenkfläche (13, 17, 20, 23, 26) an einem Ende (7) des Lichtleitelements (6, 18, 21, 24) angeordnet ist und daß das Lichtleitelement (6, 18, 21, 24) eine Lichteinkoppelfläche (15) aufweist, die sich im wesentlichen in einer gemeinsamen Ebene mit der Rückseite (5) des Lichtleitelements (6, 18, 21, 24) erstreckt.

2. Leuchte nach Anspruch 1, dadurch gekennzeichnet, daß das Lichtleitelement (6, 18, 21, 24) als stabförmiges Lichtleitelement (6, 18, 21, 24) ausgebildet ist, wobei sich eine erste Umlenkfläche (13) in einem spitzen Winkel zu einer Längsachse (16) des Lichtleitelements (6) erstreckt, derart, daß das Lichtbündel in Richtung der Längsachse (16) reflektiert wird, und daß die Reflexionsfläche (8) eine Vielzahl von lichtablenkenden Prismen (9) aufweist.

3. Leuchte nach Anspruch 1 oder 2, dadurch gekennzeichnet, daß das der Lichteinkoppelfläche (15) abgewandte Ende des Lichtleitelements (6, 18, 21, 24) eine zweite Umlenkfläche (17) umfaßt, die sich parallel zu der gegenüberliegenden ersten Umlenkfläche (13) erstreckt.

4. Leuchte nach einem der Ansprüche 1 bis 3, dadurch gekennzeichnet, daß die Reflexionsfläche (8) in Richtung auf das von der Lichteinkoppelfläche (15) abgewandte Ende des Lichtleitelements (18) kontinuierlich zu der Lichtaustrittsfläche (11) ansteigt.

5. Leuchte nach einem der Ansprüche 1 bis 4, dadurch gekennzeichnet, daß das der Lichteinkoppelfläche (15) abgewandte Ende des Lichtleitelements (21) als sich quer zur Längsachse (16) erstreckendes bogenförmiges Lichtaustrittssegment (22) ausgebildet ist, das sich unmittelbar an die in Längsrichtung verlaufende Lichtaustrittsfläche (11) anschließt.

6. Leuchte nach einem der Ansprüche 1 bis 5, dadurch gekennzeichnet, daß mehrere Lichtleitelemente (6, 18, 21) nebeneinander angeordnet sind, wobei benachbarte Lichtleitelemente (6, 18, 21) derart zueinander orientiert sind, daß in Richtung der optischen Achse (14) der Lichtquelle (4) zum einen eine erste Umlenkfläche (13) eines ersten Lichtleitelements (6, 18, 21) und zum anderen eine nachgeordnete zweite Umlenkfläche (17) des benachbarten Lichtleitelements (6, 18, 21) angeordnet ist, wobei die zweite Umlenkfläche (17) das in dem benachbarten Lichtleitelement (6, 18, 21) geführte Licht in Richtung der Lichtaustrittsfläche (11) desselben umlenkt.

7. Leuchte nach Anspruch 6, dadurch gekennzeichnet, daß die gegenüberliegenden Umlenkflächen (13, 17) der Lichtleitelemente (6, 21) als ebene und zueinander parallel verlaufende schräge Umlenkflächen ausgebildet sind, wobei die zueinander orientierten Umlenkflächen (13, 17) benachbarter Lichtleitelemente (6, 21) voneinander beabstandet sind.

8. Leuchte nach einem der Ansprüche 1 bis 7, dadurch gekennzeichnet, daß die Umlenkflächen (13, 16) und/oder die Reflexionsfläche (8) verspiegelt ausgebildet ist.

9. Leuchte nach einem der Ansprüche 1 bis 5, dadurch gekennzeichnet, daß das Lichtleitelement (24) symmetrisch zu einer Quermittelebene (25) ausgebildet ist, wobei an den gegenüberliegenden Enden jeweils eine Lichtquelle (4) angeordnet ist, und daß der Lichtquelle (4) jeweils eine Umlenkfläche (26) zugeordnet ist, derart, daß jeweils endseitig eingeleitete Lichtbündel in einer entgegengesetzten und zueinander verlaufenden Richtung umgelenkt wird.

10. Leuchte nach mindestens einem der vorstehenden Ansprüche, dadurch gekennzeichnet, daß die Umlenkfläche (13, 17, 20, 23, 26) mit lichtrichtenden optischen Mitteln versehen ist.

11. Leuchte nach Anspruch 10, dadurch gekennzeichnet, daß die optischen Mittel als eine Mikrooptik ausgebildet sind.

12. Leuchte nach Anspruch 10, dadurch gekennzeichnet, daß die Umlenkfläche (13, 17, 20, 23, 26) als eine frei geformte lichtrichtende Fläche ausgebildet ist.
